(19) Europäisches Patentamt
European Patent Office
Office européen des brevets

(11) EP 3 438 657 A1

(12) EUROPEAN PATENT APPLICATION

(43) Date of publication:
06.02.2019 Bulletin 2019/06

(51) Int Cl.:
*G01N 27/90* (2006.01)

(21) Application number: 18187116.1

(22) Date of filing: 02.08.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 02.08.2017 US 201762540176 P

(71) Applicant: Eddyfi NDT Inc.
Québec, Québec G1P 0B3 (CA)

(72) Inventors:
• SISTO, Marco Michèle
Québec, Québec G2A 3X4 (CA)
• ROCHETTE, Maxime
Lévis, Québec G6X 2H7 (CA)
• HARDY, Florian
Lac-Sergent, Québec G0A 2J0 (CA)
• DION, Louis-Philippe
Québec, Québec G2K 0G8 (CA)

(74) Representative: Lavoix
Bayerstrasse 83
80335 München (DE)

(54) **DEVICE FOR PULSED EDDY CURRENT TESTING OF FERROMAGNETIC STRUCTURES COVERED WITH FERROMAGNETIC PROTECTIVE JACKET**

(57) A Pulsed Eddy Current (PEC) probe for PEC testing of a ferromagnetic object covered with a ferromagnetic protective jacket, the PEC probe comprising: at least one coil (not shwon) for at least one of generating an inspection magnetic field and detecting an induced magnetic field; at least one permanent magnet (204, 206) for magnetically saturating the ferromagnetic protective jacket; and means for selectively reducing an attraction between the at least one magnet and the ferromagnetic protective jacket. the means for selectively reducing the atraction between the at least one magnet and the ferromagnetic protective jacket can be given by an appropriate design of the saturation magnet or can include mechanical, magnetic or electrical means to ease the displacement/detachment of the probe on the jacket, for example by increasing the distance between the magnets and the jacket or by screening the intensity of the magnetic field that reaches the jacket.

Figure 2A

EP 3 438 657 A1

## Description

TECHNICAL FIELD

The invention relates to pulsed eddy current testing of electrically conductive structures covered with a ferromagnetic protective jacket and more particularly, to a probe with a saturation magnet design and means to ease the separation of the probe and the jacket.

BACKGROUND OF THE ART

Non-destructive testing (NDT) is a discipline which aims at evaluating the integrity and/or physical properties of materials without permanently altering the object being inspected. There are numerous NDT methods, tailored to various material, object and defect types. Pulsed Eddy Current (PEC) or Transient Eddy Current (TEC) techniques are especially efficient at measuring thickness variations in insulated and/or thick conductive objects.

The working principle of PEC is described as follows: a magnetic pulse is generated by a magnetic source placed at some elevation (or lift-off) from the surface of an object under inspection, which must be electrically conductive. During a first excitation phase, the pulse remains active long enough for the magnetic field to penetrate the full thickness of the object. Following the abrupt extinction of the pulse, eddy currents are generated in the metal mass. These currents induce a secondary magnetic field which can be sensed by a magnetic sensor and decays over time. In this phase, referred to as the reception phase, the sensor generates a signal that is recorded and analyzed. The shape and decay rate of this signal can be related to the thickness of the object being inspected.

In many practical situations, the object being inspected is protected by a thermal insulation layer covered by a protective jacket. Typically, the insulation layer is made of non-magnetic and non-conductive materials. The jacket is often a thin metallic layer whose primary function is to protect the insulation layer and the inspected object from water ingress and weather action, while contributing to long term adherence and mechanical integrity of the insulation layer. Typically, metallic jackets are made of corrosion-resistant materials such as aluminum, stainless steel or galvanized steel.

PEC techniques can be used for the inspection of insulated objects even when the insulation is covered with jackets made of electrically conductive but non-magnetic metals such as aluminum and stainless steel. However, the corrosion detection and sizing capability of conventional PEC techniques is impaired by the presence of conductive and ferromagnetic jackets, for example those made of galvanized steel.

The detrimental effect of ferromagnetic jackets is related to the magnetic permeability, which is significantly higher than 1. This has multiple consequences: first, a ferromagnetic jacket screens and absorbs part of the magnetic field generated by the PEC magnetic source during the excitation phase. Hence, only a fraction of the magnetic field emitted by the probe reaches the object under inspection, and, consequently, the intensity of signal detected from the object in the reception phase is also reduced. In addition, a ferromagnetic jacket spatially disperses the PEC magnetic field, making it more difficult to detect small corrosion spots. Finally, a conductive jacket will generate eddy currents which may partially mask the signal from the object under inspection. This effect is also visible in some conductive non-ferromagnetic jackets made of aluminum. However, at equal conductivity values, the magnetic diffusion equations teach that the decay of these eddy currents is slower in ferromagnetic jackets, meaning that the masking effect lasts longer and is, in practice, more detrimental.

The detrimental effects of ferromagnetic jackets on PEC signals can be mitigated by bringing the jacket into deep magnetic saturation. A ferromagnetic material can be saturated by exposing it to a strong magnetic field. Under magnetic saturation, the permeability of the material decreases sensibly. This principle has been applied to PEC in Chinese patent CN101520435B and in literature publications by the Huazhong University of Science and Technology (Xu et al., "Measurement of Wall Thinning through Insulation with Ferromagnetic Cladding Using Pulsed Eddy Current Testing", Advanced Materials Research Vols. 301-303 (2011) pp 426-429 and Wu et al., "Development of Pulsed Eddy Current Testing System for Wall Thinning through Insulation with Ferromagnetic Cladding", 18th World Conference on Non-destructive Testing, 16-20 April 2012, Durban, South Africa). In these publications, the authors show that magnetic saturation of the ferromagnetic jacket can be reached using a large magnet placed in proximity to a PEC sensor. By saturating the jacket, the sizing of corrosion under insulation (CUI) is improved. More specifically, the spatial dispersion of the PEC magnetic field is largely reduced, improving the detection of small corrosion spots. In addition, eddy currents generated in the saturated jacket decay faster so that the PEC signal from the object under inspection is less masked by the signal from the jacket.

Note that, for the saturation method to be effective, the jacket must be magnetically saturated over a sizable fraction of the area covered by the PEC sensor. Typical jackets have a thickness comprised between 0.3 mm to 1 mm. Bringing such thicknesses of ferromagnetic jacket into saturation over a large area require a strong magnetic field.

Chinese patent CN101520435B discloses two possible sources of the saturation magnetic field: a magnet or a Direct Current (DC) saturation coil. In view of the strength of magnetic field required to bring typical jackets into saturation, the use of a DC saturation coil is unrealistic. To generate a sufficiently large field, the coils would need to be very large and bulky, and would need to be excited with a large DC current for the whole duration of a PEC measurement (up to hundreds of milliseconds, depending on the object under inspection). Such a large coil would dissipate a large amount of energy into heat, which creates additional technical challenges for the avoidance of overheating of the PEC probe. In addition, the saturation DC field needs to be maintained constant over the PEC measurement time as any oscillation or noise on the current energizing the saturation coil would be coupled to the PEC sensor, impairing the PEC measurement signal-to-noise ratio.

More realistically, the source of the saturation magnetic field can be a magnet, which provides a constant and noiseless magnetic field without heat dissipation. In addition, rare hearth magnets can generate very strong magnetic fields in a small volume and weight.

One downside of the use of magnets is that the strong saturation field is always active. This field is associated to a strong attraction force that makes the PEC probe strongly adhere on the jacket. The implementation of the saturation method using magnets into a practical PEC probe that can be displaced on the jacket and detached with ease is a problem in the art.

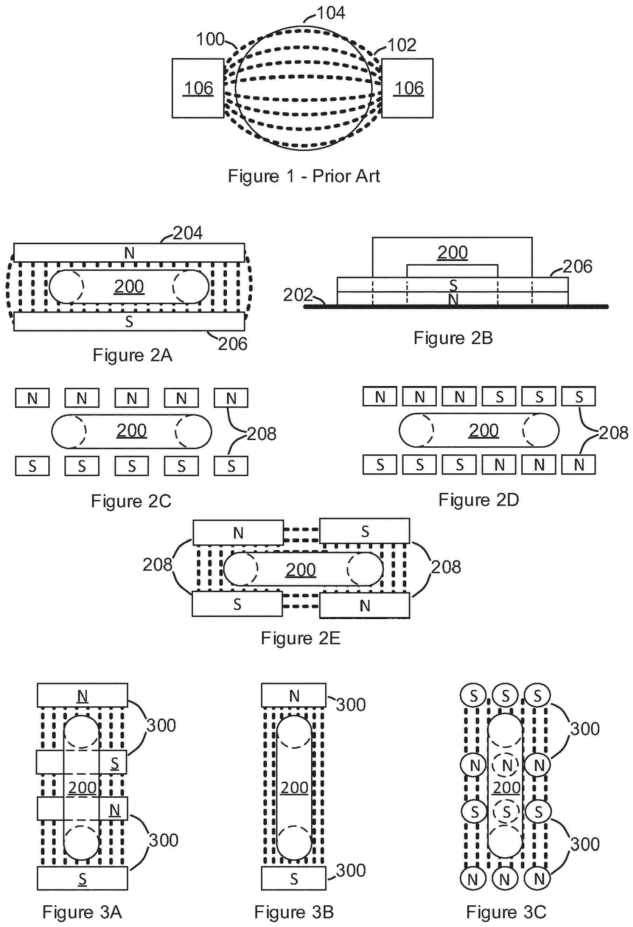

The optimization of the saturation magnet design has not been addressed by the prior art. Example embodiments based on magnets disclosed in prior art are based on a simplistic magnet design, as shown in FIG. 1. A person skilled in the art will recognize that this configuration concentrates the saturation field in two spots 100 and 102 on opposite sides of the PEC sensor 104. As a consequence, large magnets 106 are required to saturate the jacket under the sensor to an appropriate degree, and the attraction force of the probe on the jacket is very large. On realistic ferromagnetic jackets, such a simplistic design would increase the risk of tearing, peeling, bending or otherwise damaging the jacket when the probe is moved or detached. In addition, moving the probe on the jacket would require significant operator effort, causing fatigue during a prolonged object inspection.

Therefore, there is a need for an improved PEC probe for PEC testing of a ferromagnetic object covered with a ferromagnetic protective jacket.

SUMMARY

In addition to controlling the attraction force with appropriate saturation magnet design, an example probe design would include mechanical, magnetic or electrical means to ease the displacement of the probe on the jacket as well as the detachment of the probe from the jacket. These means contribute to minimize the risk of tearing, peeling, bending or otherwise damaging the jacket while using the probe.

In accordance with one broad aspect, there is provided a Pulsed Eddy Current (PEC) probe for PEC testing of a ferromagnetic object covered with a ferromagnetic protective jacket, the PEC probe comprising: at least one coil for at least one of generating an inspection magnetic field and detecting the magnetic field induced or generated by the object under inspection; at least one permanent magnet for magnetically saturating the ferromagnetic protective jacket; and means for selectively reducing an attraction between the at least one magnet and the ferromagnetic protective jacket.

In one embodiment, the PEC probe further comprises a magnetic sensor for detecting the induced magnetic field, the at least one coil being generating said inspection magnetic field only.

In one embodiment, the magnetic sensor comprises one of a detection coil, a Giant Magneto-Resistor, a Tunneling Magneto-Resistor and a Hall effect sensor.

In one embodiment, the at least one coil and the magnetic sensor are placed in close proximity to minimize a combined size of an excitation region and a sensing region.

In one embodiment, the at least one coil is configured for both generating the inspection magnetic field and detecting the induced magnetic field.

In one embodiment, a design of said probe is based upon equation $F = \dfrac{B^2 * A}{2\mu_0}$, where $F$ is an attraction force between said probe and said ferromagnetic protective jacket, $\mu_0$ is a vacuum magnetic permeability constant, $B$ is a maximum magnetic flux density field generated by said at least one magnet and $A$ is a total area of s said at least one magnet.

In one embodiment, said at least one coil comprises a yoke-type coil.

In one embodiment, said at least one permanent magnet comprises a plurality of magnets disposed near legs of the yoke-type coil, with opposite poles of the plurality of magnets being placed on opposite sides of the yoke-type coil to direct a magnetic saturation under the legs of the yoke-type coil.

In one embodiment, said at least one coil and said magnetic sensor are provided by coaxial excitation and magnetic sensor.

In one embodiment, said at least one permanent magnet comprise a toroidal magnet and a cylindrical magnet placed coaxial to the coaxial excitation and magnetic sensor.

In one embodiment, said at least one permanent magnet comprises several magnets placed around the coaxial excitation and magnetic sensor.

In one embodiment, each one of said at least one coil is wound around a respective one of the at least one permanent magnet.

In one embodiment, the means for selectively reducing the attraction comprises mechanical means for increasing a distance between the at least one permanent magnet and the ferromagnetic protective jacket.

In one embodiment, the PEC probe further comprises a casing, the at least one coil and the at least one permanent magnet being enclosed in the casing.

In one embodiment, the casing is provided with a handle for rotating the casing away from the ferromagnetic protective jacket about a fulcrum point.

In one embodiment, the mechanical means comprises a lever device for increasing the distance between the at least one permanent magnet and the ferromagnetic protective jacket.

In one embodiment, the casing comprises a bottom casing body and a top casing body movable relative to the bottom casing body, the at least one coil and the at least one permanent magnet being secured to the top casing body, the bottom casing body comprising a bottom face to be positioned in physical contact with the ferromagnetic protective jacket and a top face shaped so as to increase a distance between the at least one permanent magnet and the bottom face of the bottom casing body upon at least one of a rotation and a translation of the top casing body relative to the bottom casing body.

In one embodiment, the PEC probe further comprises at least one spring, the casing comprising a bottom casing body and a top casing body movable relative to the bottom casing body, the at least one coil and the at least one permanent magnet being secured to the top casing body, the bottom casing body comprising a bottom face to be positioned in physical contact with the ferromagnetic protective jacket, the spring being secured between the bottom casing body and the top casing body.

In one embodiment, the PEC probe further comprises at least one retractable wheel secured to the casing for raising the probe from the ferromagnetic protective jacket.

In one embodiment, the PEC probe further comprises at least one spring-equipped wheel having a comma-like shape for raising the probe from the ferromagnetic protective jacket.

In one embodiment, the means for selectively reducing the attraction comprises at least one additional magnet movable between a rest position in which the at least one additional magnet is away from the at least one permanent magnet and an active position in which the at least one additional magnet is positioned adjacent to the at least one permanent magnet, a pole of the at least one secondary magnet being placed in opposition to a pole of the at least one permanent magnet.

In one embodiment, the at least one coil is connectable to a source of electrical current for generating a further magnetic field opposing the natural magnetic field of the at least one permanent magnet.

In one embodiment, the probe is designed so as to maximize a magnetic saturation of the ferromagnetic jacket under a surface of the probe while minimizing the attraction force between the probe and the jacket.

In one embodiment, the minimization of said attraction force includes minimizing said maximum magnetic flux density field *B.*

In one embodiment, the minimization of said attraction force includes minimizing said total area A of said set of said at least one permanent magnets.

In one embodiment, the maximization of said magnetic saturation includes minimizing the differential magnetic permeability of the ferromagnetic jacket.

In one embodiment, wherein North or South pole of the at least one permanent magnet is provided at said surface of said probe to be placed adjacent to said jacket in use.

In one embodiment, the maximization of said magnetic saturation includes, in use, maximizing a saturation of an excitation region between said set of at least one permanent magnet and said jacket and a saturation of a sensing region between said magnetic sensor and said jacket.

In one embodiment, said means are at least one of mechanical, electrical and magnetic.

BRIEF DESCRIPTION OF THE DRAWINGS

Further features and advantages of the present invention will become apparent from the following detailed description, taken in combination with the appended drawings, in which:

Fig. 1 illustrates a PEC probe, according to the prior art;

Fig. 2A illustrates a PEC probe comprising a yoke-type coil and two permanent magnets positioned on opposite sides of a longitudinal axis of the yoke, in accordance with an embodiment;

Fig. 2B illustrates a PEC probe comprising a yoke-type coil and two permanent magnets positioned a same side of a longitudinal axis of the yoke, in accordance with an embodiment;

Fig. 2C illustrates a PEC probe comprising a yoke-type coil, six permanent magnets having a same polarity on a first side of the longitudinal axis of the yoke, and six permanent magnets having a different polarity on a second side of the longitudinal axis of the yoke, in accordance with an embodiment;

Fig. 2D illustrates a PEC probe comprising a yoke-type coil and two sets of permanent magnets each on a respective side of the longitudinal axis of the yoke, each set of magnets comprising three permanent magnets having a first polarity and three permanent magnets having a second polarity, in on a first side of the longitudinal axis of the yoke, and six permanent magnets having a different polarity on a second side of the longitudinal axis of the yoke, in accordance with an embodiment;

Fig. 2E illustrates a PEC probe comprising a yoke-type coil and two sets of permanent magnets each on a respective side of the longitudinal axis of the yoke, each set of magnets comprising two permanent magnets, in accordance with an embodiment;

Fig. 3A illustrates a PEC probe comprising a yoke-type coil and four main permanent magnets aligned along the longitudinal axis of the yoke, in accordance with an embodiment;

Fig. 3B illustrates a PEC probe comprising a yoke-type coil and two permanent magnets aligned along the longitudinal axis of the yoke, in accordance with an embodiment;

Fig. 3C illustrates the PEC probe of Fig. 3A for which each main permanent magnet has been replaced by three magnets, in accordance with an embodiment;

Fig. 4 illustrates a PEC probe comprising a yoke-type coil and two sets of magnets each comprising four permanent magnets positioned according to a square arrangement around a respective leg of the yoke, in accordance with an embodiment;

Fig. 5 illustrates a PEC probe comprising a yoke-type coil and two sets of magnets each comprising four permanent magnets positioned according to a cross arrangement around a respective leg of the yoke, in accordance with an embodiment;

Fig. 6 illustrates a PEC probe comprising a coil, toroidal magnet and a cylindrical magnet, in accordance with an embodiment;

Fig. 7A illustrates a PEC probe comprising a coil and two groups of magnets each comprising six magnets, the magnets of the first group being located inside the coil and having alternating polarity, and the magnets of the second group being located outside the coil and having alternating polarity, in accordance with an embodiment;

Fig. 7B illustrates a PEC probe comprising a coil and two groups of magnets each comprising six magnets, the magnets of the first group being located inside the coil and having the same polarity, and the magnets of the second group being located outside the coil and the same polarity opposite to the polarity of the magnets of the first group, in accordance with an embodiment;

Fig. 8 illustrates a PEC probe comprising a yoke-type coil and four magnets aligned along the longitudinal axis of the yoke and each provided with a coil wound therearound, in accordance with an embodiment;

Figs. 9A and 9B illustrate a PEC probe comprising a casing provided with a handle for rotating the probe around a fulcrum point, in accordance with an embodiment;

Figs. 10A and 10B illustrate a PEC probe comprising a rotatable lever mechanism for varying a distance between permanent magnets and an object under inspection, in accordance with an embodiment;

Figs. 11A and 11B illustrate a PEC probe comprising a translatable lever mechanism for varying a distance between permanent magnets and an object under inspection, in accordance with an embodiment;

Figs. 12A and 12B illustrate a PEC probe comprising a casing formed of a top casing body and a bottom casing body, the top casing body being translatable relative to the bottom casing body for varying a distance between permanent magnets and an object under inspection, in accordance with an embodiment;

Figs. 13A and 13B illustrate a PEC probe comprising a casing formed of a top casing body and a bottom casing body, the top casing body being rotatable about an axis orthogonal to a bottom face of the bottom casing body for varying a distance between permanent magnets and an object under inspection, in accordance with a first embodiment;

Figs. 14A and 14B illustrate a PEC probe comprising a casing formed of a top casing body and a bottom casing body, the top casing body being rotatable about an axis orthogonal to a bottom face of the bottom casing body for varying a distance between permanent magnets and an object under inspection, in accordance with a second embodiment;

Figs. 15A and 15B illustrate a PEC probe comprising a casing formed of a top casing body and a bottom casing body, the top casing body being rotatable about an axis parallel to a bottom face of the bottom casing body for varying a distance between permanent magnets and an object under inspection, in accordance with a first embodiment;

Fig. 16 illustrates a PEC probe comprising a casing formed of a top casing body and a bottom casing body secured together via a spring, in accordance with an embodiment;

Figs. 17A and 17B illustrate a PEC probe comprising four retractable wheels for varying a distance between permanent magnets and an object under inspection, in accordance with an embodiment;

Figs. 18A and 18B illustrate a PEC probe comprising two retractable wheels for adjusting a distance between permanent magnets and an object under inspection, in accordance with an embodiment; and

Figs. 19A and 19B illustrate a PEC probe comprising a spring-equipped wheel provided with a comma-like shape for adjusting a distance between permanent magnets and an object under inspection, in accordance with an embodiment.

It will be noted that throughout the appended drawings, like features are identified by like reference numerals.

DETAILED DESCRIPTION

There is described a PEC probe for PEC testing of a ferromagnetic object covered with a ferromagnetic protective jacket, the PEC probe comprising: at least one coil for at least one of generating an inspection magnetic field and detecting an induced magnetic field; at least one permanent magnet for magnetically saturating the ferromagnetic protective jacket; and means for selectively reducing an attraction between the at least one magnet and the ferromagnetic protective jacket.

One configuration includes an excitation coil, a magnetic sensor, a set of at least one magnet to generate a saturation field in a ferromagnetic jacket and means of easing the movement/detachment of the probe.

Separate (for example concentric or coaxial) coils can be used with separate excitation and sensing functions. The magnetic sensor can be implemented using Giant Magneto-Resistors, Tunnelling Magneto-Resistors, Hall effect sensors or other similar magnetic sensors. In some embodiments, the excitation coil can be reused as the magnetic sensor in a dual-function coil configuration.

The means of easing the movement/detachment of the probe can be mechanical, electrical or magnetic.

The optimum magnet design provides a spatially uniform saturation underneath the area covered by the PEC probe, while minimizing the attraction force between the probe and the jacket. The attraction force F can be estimated using the following formula:

$$F = \frac{B^2 * A}{2\mu_0} \ (\text{Eq. } 1)$$

where $B$ is the magnetic flux density field generated by the magnet, $A$ is the area of the magnet facing the jacket and $\mu_0$ is the vacuum magnetic permeability. As the force is proportional to the square of the $B$ field, the optimum design for the saturation magnet controls the $B$ field spatial distribution to saturate uniformly the jacket underneath the area covered by the PEC probe while avoiding regions of strong field concentration. The PEC sensor and the magnet configuration can also be jointly optimized to minimize the jacket area that needs to be saturated, further reducing the attraction force.

The level of magnetic saturation is typically described with B-H magnetization curves. These curves are specific to a material and describe the evolution of the magnetic flux B in the material when a magnetic field H is imposed. The curves for ferromagnetic materials typically show a knee, beyond which the B field has little dependence on H, in contrast with the beginning of the B-H magnetization curve where B is strongly dependent on H. Considering the B-H magnetization curve for the ferromagnetic jacket, sufficient magnetic saturation is reached when the magnetic field H imposed by the magnets exceeds the curve knee. Under sufficient saturation of the jacket, the differential magnetic permeability $\mu' = \Delta B/\Delta H$, i.e. the slope of the B-H curve measured for the jacket, decreases below the value observed at low magnetic field levels.

The magnet configuration for the set of at least one magnet is carefully designed to saturate the area under the PEC coil with minimum $B$ field strength, while minimizing the field extension beyond the area of interest. Typically, the magnets are placed with N or S poles facing the jacket to ensure appropriate saturation of the jacket.

In one embodiment, at least some of the objectives to be prioritized for the magnet configuration are the following.

The attraction force between the probe and the jacket (as estimated by equation 1) should be minimized. This can be achieved by minimizing the maximum magnetic flux density field $B$ generated by the magnet and the total area of the magnets $A$.

A sufficient extension of the saturated zone and an adequate level of saturation of the jacket should be provided. Both regions beneath the excitation coil and the magnetic sensor should be adequately saturated. The excitation coil and the magnetic sensor can be designed to be coaxial or placed in close proximity so as to minimize the region of jacket that requires magnetic saturation.

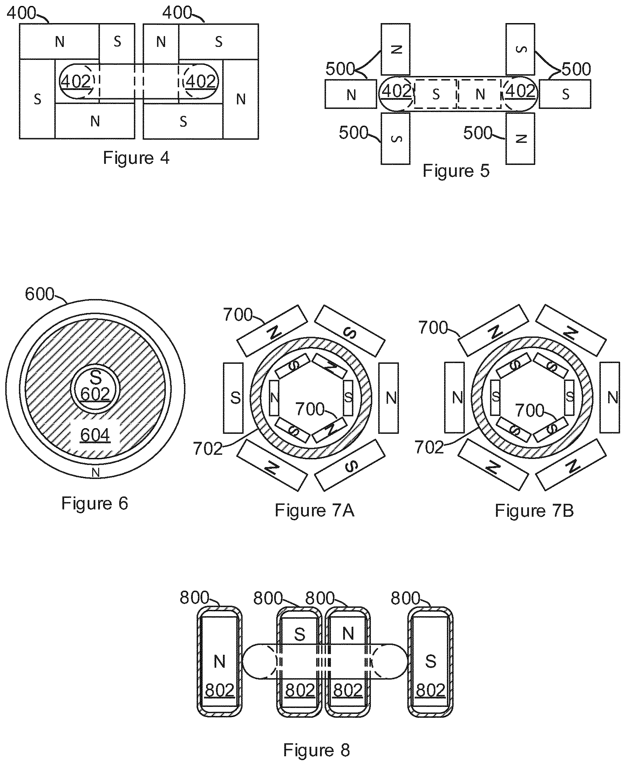

Various magnet configurations can be considered while taking into account the design of the excitation coil and the magnetic sensor. A yoke-type coil design directs the magnetic field toward the object under test. For yoke coils, possible magnets configurations include the examples presented in Figs. 2A to Fig. 5. For round coil designs with coaxial excitation and sensing coils, possible magnets configurations include the examples presented in Figs. 6 to Fig. 7B.

Figs. 2A-2E illustrate different PEC probes for sensing a sample covered with a jacket 202. Each PEC probe comprises a yoke 200, at least one coil (not shown) wound around the yoke 200 and a plurality of magnets. In one embodiment, the magnets are disposed along the longitudinal axis of the yoke 200 on opposite sides of the longitudinal axis with alternating poles facing the jacket 202, as shown in Fig. 2A and Fig. 2B. This configuration can be implemented with two magnets 204 and 206, with the long side at least as long as the yoke (Fig. 2A and 2B). Alternatively, the configuration can be implemented with several small magnets 208 (Figs. 2C, 2D and 2E).

As illustrated in Fig. 2C, a PEC probe may comprise 5 magnets positioned on one side of the longitudinal axis of the yoke 200 and each having their south pole facing the jacket 202 of the sample to be analyzed, and 5 magnets positioned on the other side of the longitudinal axis of the yoke 200, each having their north pole facing the jacket 202 and each facing a respective magnet positioned on the other side of the longitudinal axis of the yoke 200.

Fig. 2D illustrates one embodiment of a PEC probe 6 magnets 208 positioned on one side of the longitudinal axis of the yoke 200 and 6 other magnets 208 positioned on the opposite side of the longitudinal axis of the yoke 200. On one side of the longitudinal axis of the yoke 200, three consecutive or adjacent magnets are positioned so that their south pole faces the jacket 202 while the other magnets located on the same side of the longitudinal axis of the yoke 200 are positioned so that their north pole faces the jacket 202. On the other side of the longitudinal axis of the yoke 200, each magnet is positioned to face a respective magnet positioned on the first side of the longitudinal axis, hereinafter referred to as a mirror magnet, and the polarity of each magnet is the reverse of that of its mirror magnet, i.e. if the south face of the mirror magnet faces the jacket 202, then the north pole of the magnet on the other side of the longitudinal axis faces the jacket 202.

It should be understood that the number and position of magnets may vary as long as the north or south pole faces the jacket and opposite poles are placed on opposite sides of the yoke, so that the magnetic field captured by the jacket 202 is directed under the yoke legs.

Fig. 2E illustrates one embodiment of a PEC probe comprising a yoke, at least one coil (not shown) and four magnets 208. Two magnets are positioned on a first side of the longitudinal axis of the yoke 200, each facing a respective leg of the yoke 200. The other two magnets are both positioned on the other side of the longitudinal axis of the yoke and each face a respective leg of the yoke 200. The polarity of two magnets located on a same side of the yoke 200 is reversed and the polarity of two magnets located on opposite sides of a same yoke leg is also reversed. The configuration of Fig. 2E can be implemented with magnets having any adequate shape such as rectangular, square or round shape.

While the PEC probes illustrated in Figs. 2A-2E comprise magnets positioned parallel to the longitudinal axis of the yoke 200, Figs. 3A-3C, illustrate PEC probes for which the magnets 300 are disposed along the longitudinal axis of the yoke 200 perpendicularly to the longitudinal axis of the yoke 200. Fig. 3A illustrates one embodiment of a PEC probe that comprises a yoke, at least one coil (not shown) and four magnets 300. Each magnet 300 is positioned so that its longitudinal axis is orthogonal to the longitudinal axis of the yoke 200. A first magnet 300 is located between the two legs of the yoke 200 adjacent to a first leg while a second magnet 300 is also located between the two legs of the yoke but adjacent to the other leg. A third magnet 300 is positioned on the other side of the first leg of the yoke 200 and faces the first magnet 300. A fourth magnet 300 is positioned on the other side of the second leg and faces the second magnet 300. The polarity of two successive or adjacent magnets is reversed.

Fig. 3B illustrates one embodiment of a PEC probe comprising a yoke 200, two magnets 300 and at least one coil (not shown). In this configuration, the two magnets 300 are positioned along the longitudinal axis of the yoke 200 outside of the yoke 200. Furthermore, the longitudinal axis of each magnet 300 is orthogonal to the longitudinal axis of the yoke 200. The polarity of the two magnets 300 is reversed, i.e. if the north pole of one of the two magnets 300 faces the jacket 202, then the south pole of the other magnet 300 faces the jacket 202.

Fig. 3C illustrates a PEC probe that is similar to the PEC probe illustrated in Fig. 3A except that each magnet of the PEC probe of Fig. 3A has been replaced by a group of three magnets aligned along an axis that is orthogonal to the longitudinal axis of the yoke 200. In addition and optionally, the polarity between a given magnet in the PEC probe of Fig. 3A and the corresponding group of magnets is reversed.

While in Fig. 3A, the magnets have the N-S-N-S (north-south-north-south) alternating pole configuration along the longitudinal axis of the yoke 200, it should be understood that the magnets could be provided with a S-N-S-N polarity configuration.

Fig. 4 illustrates one embodiment of a PEC probe comprising a yoke provided with two legs 402, at least one coil (not shown) and two groups of four magnets 400. The magnets 400 of each group are positioned so as to form a square around a respective leg 402 of the yoke. For each group, adjacent magnets 400 have a reversed polarity. Fig. 5 illustrates one embodiment of PEC probe comprising a yoke provided with two legs 402, at least one coil (not shown) and two groups of four magnets 500. The magnets 500 of each group are arranged according to a cross configuration around a respective leg 402 so that the leg 402 be positioned at the center of the cross formed by the magnets 500. For each group, opposite magnets 500 have a reversed polarity and the magnets 500 of the two groups that are adjacent together and located between the two legs 402 also have a reversed polarity.

Fig. 6 illustrates one embodiment of a PEC probe that comprises a coil 604, toroidal magnet 600 and a cylindrical magnet 602. The cylindrical magnet is positioned inside the coil 604 and the coil 604 is positioned inside the toroidal magnet 600 so that the coil 604 and the magnets 600 and 602 are coaxial. The polarity of the two magnets 600 and 602 are reversed.

Fig. 7A illustrates one embodiment of a PEC probe that comprises a coil 702 and two groups each comprising six magnets 700. The magnets 700 of the first group are positioned around the coil 702 so as to form a circle of magnets around the coil 702 and adjacent ones of the first group of magnets 700 have a reversed polarity. The magnets 700 of the second group are positioned inside the coil 702 so as to form a circle of magnets inside the coil 702 and adjacent ones of the second group of magnets 700 have a reversed polarity. In addition, the magnets 700 of the first and second groups are positioned so that each magnet 700 of the first group faces a respective magnet 700 of the second group and the polarity of a given one of the magnets of the first group has a reversed polarity with respect to its corresponding magnet of the second group.

Fig. 7B illustrates a PEC probe that is similar to the PEC probe of Fig. 7A except that the magnets 700 of the first group all have the same polarity and the magnets 700 of the second group also have the same polarity which is reversed in comparison to that of the first group of magnets 700.

Fig. 8 illustrates one embodiment of a PEC probe which comprises a yoke, four magnets 802 and four coils 800. The magnets 802 are positioned along the longitudinal axis of the yoke so that their axis be orthogonal to the longitudinal axis of the yoke. Two magnets 802 are positioned side-by-side between the legs of the yoke, each facing a respective leg. The other two magnets 802 are positioned so as to face a respective magnet located between the two legs of the yoke and so that each leg of the yoke be positioned between two magnets 802. The polarity of the magnets 802 is chosen so that adjacent magnets 802 have a reversed polarity. Each one of the four coil 800 is wound around a respective magnet 802.

In one embodiment, the excitation coil, the magnetic sensor (if any) and the magnets are assembled in such a way as to avoid movement or vibration of the coil and sensor relative to the magnets.

In one embodiment, the magnets can be detachable from the probe to allow for reconfiguration of the magnet positions, dimensions and/or strength.

The mechanical, electrical or magnetic means of easing the movement/detachment of the probe from the jacket aim to reduce the attraction force F between the jacket and the probe. This can be generally obtained by reducing the intensity of the magnetic flux density field B by increasing the distance between the magnets and the jacket or by screening or otherwise reducing the intensity of B field that reaches the jacket.

In one embodiment, the mechanical, electrical or magnetic means may include moving parts. These moving parts may be operated manually by direct action of an operator or through an actuator (electrical motor, hydraulic or pneumatic cylinder, etc.). The actuator can also be activated automatically by the PEC instrument.

An example of mechanical means for reducing the attraction force F is based on a mechanism adapted to vary the distance between the magnets arrangement or at least a section of the magnet arrangement and the jacket surface to tune the level of saturation and attraction force. If the magnets are moved far from the jacket, for example, separated from the jacket by at least 1 cm, the attraction force can be considerably reduced and the probe can be detached easily from the jacket. Hence, a mean of reducing the attraction force F may be based on a lever and fulcrum concept. The probe casing may be designed to include one or more handles and the probe shoe (i.e. the part of the probe to be #in direct contact with the jacket) may be designed with curved edges.

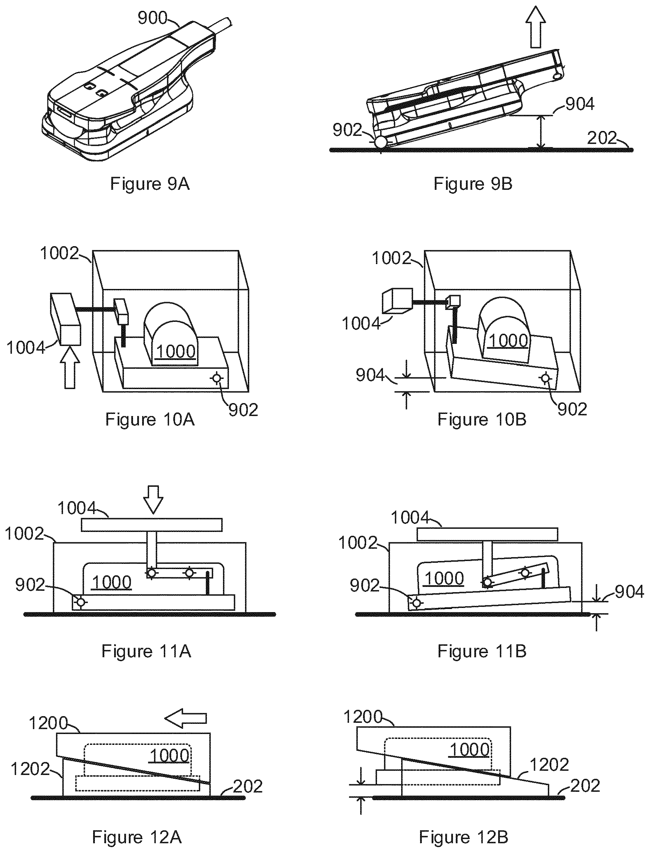

Various examples for the means for easing the movement/detachment of the probe are shown in Figs. 9A to 19B. Although shown specifically for a yoke-type magnet design or for a round coil design, all examples could be adapted to be used with the other type of design.

Fig. 9A and 9B illustrates one embodiment of a PEC probe comprising at least one magnet, at least one coil and a casing in which the magnet and the coil are inserted. Optionally the PEC probe may further comprise a yoke. The casing is provided with a handle 900 protruding from one side of the casing and the edge of the casing that is opposite to the handle 900 and adapted to be in contact with the jacket 202 of the sample to be analysed is rounded to as act a fulcrum point 902.

As illustrated in Fig. 9B, to detach the probe, the user applies a force on the handle 900 to move the handle 900 away from the jacket 202. The probe rotates around the fulcrum point 902, increasing the distance 904 between the bottom face and the jacket 202, and therefore between the magnets and the jacket 202. Hence, the probe can be easily detached from the jacket 202 and/or moved along the jacket 202.

Figs. 10A, 10B, 11A and 11B illustrate two alternative implementations of the lever and fulcrum concept illustrated in Figs. 9A and 9B. In these embodiments, the magnet and magnetic sensor arrangement 1000 is secured to a plate and the plate with the magnet and magnetic sensor arrangement 1000 secured thereto is enclosed in a casing 1002. One edge of the plate acts as a fulcrum point 902 so that the plate can be rotated about this fulcrum point 902. By rotating the plate about the fulcrum point 902 such as by lifting the edge of the plate opposite to the fulcrum point 902, the distance between the jacket and the magnet may be increased and the probe may be moved along the jacket or detached from the jacket.

Figs. 10A and 10B and Figs. 11A and 11B illustrate two different lever mechanisms for lifting the edge of the plate opposite to the fulcrum point 902. Each lever mechanism comprises a lever 1004 which extends outside of the casing so as to be accessible to a user. By activating the lever 1004, the user may lift the side of the plate that is opposite to the fulcrum point 902 and move the PEC probe along the jacket or detach the PEC probe from the jacket. It should be understood that any adequate lever mechanism adapted to be activated (by translating and/or rotating a lever) from outside of the casing and to lift one side of the plate on which the magnet is attached can be used. It should also be understood that the PEC probe may further comprise an electrical motor for activating the lever mechanism.

Figs. 12A to 16 illustrate embodiments of PEC probes provided with a casing comprising two casing bodies or sections. A first casing body is adapted to be positioned on the jacket of the object to be inspected while the second casing body is adapted to be positioned on top of the first casing body and is movable relative to the first casing body. The magnet is secured to or into the second casing body and the distance between the magnet and the jacket may be adjusted by moving the second casing body relative to the first casing body.

Figs. 12A and 12B illustrate one embodiment of PEC probe comprising a first or bottom casing body 1202, a second or top casing body 1200 and a magnet and magnetic sensor assembly 1000. In the illustrated embodiment, the first casing body 1202 comprises a planar bottom face adapted to abut the jacket 202 of the object to be inspected, and a top or opposite face which is also planar but angled or slanted relative to the bottom face. The top casing body 1200 comprises a bottom face which is planar and angled so as to match the top face of the bottom casing body 1202 so that the top casing body 1200 may slide on the bottom casing body 1202.

The magnet and magnetic sensor assembly 1000 is fixedly secured to the top casing body 1200 and protrudes partially from the bottom face of the top casing body 1200. The bottom casing 1202 is provided with a recess on its top face and the recess extends along at least a section of the top face. The recess is sized and shaped so as to receive therein the portion of the magnet and magnetic sensor assembly 1000 which protrudes from the top casing body 1200.

As illustrated in Fig. 12B, the distance between the magnet and the jacket 202 may be increased by sliding the top casing body 1200 along the top face of the bottom casing body 1202. As the distance between the magnet and the jacket 202 increases, the attraction force decreases and the probe may be moved and detached from the jacket 202.

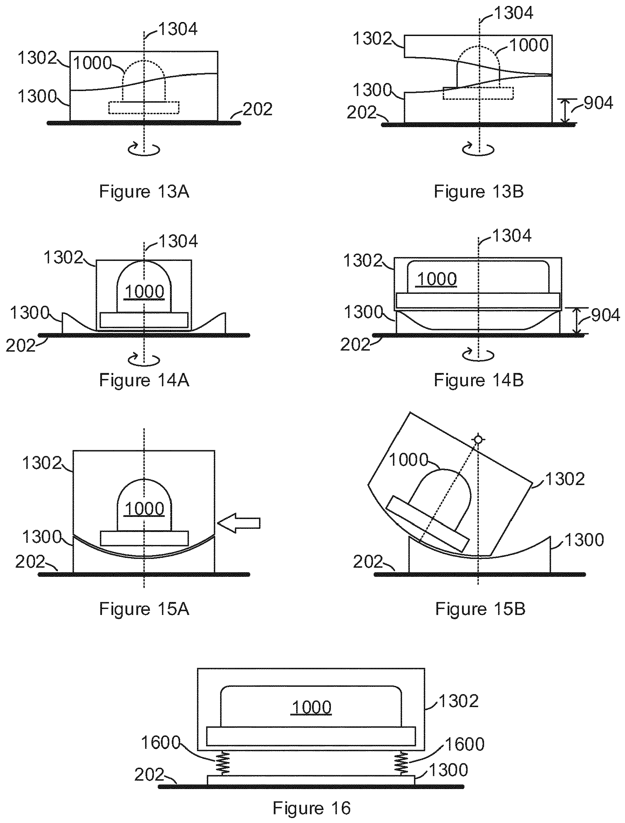

While the PEC probe of Figs. 12A and 12B can be detached from a jacket by translating a top casing body on a bottom casing body, Figs. 13A and 13B illustrate one embodiment of a PEC probe that can be detached by rotating a top casing body relative to a bottom casing body. In this case, the PEC probe comprises a first or bottom casing body 1300, a second or top casing body 1302 and a magnet and magnetic sensor assembly 1000. In the illustrated embodiment, the first casing body 1300 comprises a planar bottom face adapted to abut the jacket 202 of the object to be inspected, and a top or opposite face of which the shape is chosen so that the thickness of the first casing body 1300 varies. The top casing body 1302 comprises a bottom face of which the shape matches that of the top face of the first casing body 1300.

The magnet and magnetic sensor assembly 1000 is secured to the top casing body 1302 and protrudes partially from the bottom face of the top casing body 1302. The bottom casing 1300 is provided with a recess on its top face and the recess is sized and shaped so as to receive therein the portion of the magnet and magnetic sensor assembly 1000 which protrudes from the top casing body 1302.

As illustrated in Fig. 13B, the distance between the magnet and the jacket 202 may be increased by rotating the top casing body 1302 about a rotation axis that is orthogonal to the bottom face of the first casing body 1300. Thanks to the asymmetry of the top face of the first casing body 1300 which provides a varying thickness for the first casing body 1300, the distance between the magnet and the jacket may be varied by rotating the second casing body 1302.

Similarly, Figs. 14A and 14B illustrate one embodiment of a PEC probe which may be detached from a jacket by rotation. The PEC probe comprises a first or bottom casing body 1300, a second or top casing body 1302 and a magnet and magnetic sensor assembly 1000 which is enclosed in the top casing body 1302.

In the illustrated embodiment, the first casing body 1300 comprises a planar bottom face adapted to abut the jacket 202 of the object to be inspected, and a top or opposite face of which the shape is chosen so that the thickness of the first casing body 1300 varies. The central section of the top face is planar and parallel to the bottom face while the sections of the top face adjacent to two opposite ends of the first casing body 1300 are inclined so that the thickness of the bottom casing body 1300 increases from the central section any one of the two ends. The top casing body 1302 has a rectangular cross-sectional shape so that its bottom face is parallel to its top face. In one embodiment, the width of the second casing body 1302 corresponds to the length of the central section of the top casing body 1300 while the length of the second casing body 1302 corresponds to the length of the first casing body 1300.

The distance between the magnet and the jacket 202 is minimal when the top casing body 1302 is deposited in the top face of the bottom casing body 1300 so that the longitudinal axis of the top casing body be orthogonal to the longitudinal axis of the bottom casing body 1300, as illustrated in Fig. 14A. The distance between the magnet and the jacket 202 is increased by rotating the top casing body 1302 by 90 degrees about a rotation axis which is orthogonal to the bottom face of the bottom casing body 1300, as illustrated in Fig. 14B. The PEC probe may then be moved along the surface of the jacket 22 or detached from the jacket 202.

Figs. 15A and 15B illustrate a further embodiment of a PEC probe that can be detached from a jacket by rotation. The PEC probe comprises a first or bottom casing body 1300, a second or top casing body 1302 and a magnet and magnetic sensor assembly 1000 which is enclosed in the top casing body 1302.

In the illustrated embodiment, the first casing body 1300 comprises a planar bottom face adapted to abut the jacket 202 of the object to be inspected, and a top or opposite face which is inwardly curved or rounded. As a result, the thickness of the bottom casing body 1300 increases from its center to its lateral end. The top casing body 1302 is provided with an outwardly curved bottom face that matches the top face of the bottom casing body 1300.

The distance between the magnet and the jacket 202 is minimal when the top casing body 1302 is deposited in the top face of the bottom casing body 1300 so that axes of the top and bottom casing bodies 1300 and 1302 be superimposed, as illustrated in Fig. 15A. The distance between the magnet and the jacket 202 is increased by rotating the top casing body 1302 about a rotation axis which is parallel to the bottom face of the bottom casing body 1300, as illustrated in Fig. 15B. The PEC probe may then be moved along the surface of the jacket 22 or detached from the jacket 202.

Fig. 16 illustrates one embodiment of a PEC probe comprising a bottom casing body 1300 configured for abutting the jacket 202 of the object to be inspected, a top casing body 1302 and a magnet and magnetic sensor assembly 1000 enclosed into the top casing body 1302. The top and bottom casing bodies 1300 and 1302 are connected together via at least one spring 1600.

The springs 1600 are loaded when the top casing body 1302 approaches the jacket 202, i.e. when the magnets are attached to the jacket. The force of attraction of the magnets to the jacket is opposed by the elastic force of the springs 1600. To detach the probe from the jacket 202, the user only has to apply a force that is equal to the difference between the attraction force of the magnets and the elastic force of the springs 1600. In one embodiment, an adjustment may be included in the setup to tune or momentarily change the spring force. A tunable spring force may allow to minimize the force needed to detach the probe depending on the jacket thickness or magnetic properties, while ensuring that the probe can normally stick to the jacket and be detached with little additional user force.

In one embodiment, at least one secondary or additional magnet may be used for detaching or moving the PEC probe. The secondary magnet may be movably secured to the primary or first magnet(s) used for magnetizing the jacket. In this case, the secondary magnets may be movable between a rest position in which they are away from the primary magnets used to magnetically saturate the ferromagnetic protective jacket, and an active position in which they are adjacent or close to the primary magnets. For example, a secondary set of magnets can be placed at a given distance from a primary set of magnets (for example, above the primary set of magnets at a distance of 1 cm). The secondary magnets may have the same shape and disposition as the primary magnets, but the pole of each secondary magnet is placed in opposition to the pole of its corresponding primary magnet. Any adequate mechanical device may be used for moving the secondary set of magnets and when this secondary set is brought close to the primary set by a mechanical device, the total effective B field in the jacket is reduced thereby reducing the attraction force F. It is then easier to move the PEC probe along the jacket or to detach the probe from the jacket.

In one embodiment, a PEC probe may comprise a casing, at least one magnet, at least one coil and at least one retractable wheel movably secured to the frame. The magnet and the coil (and optionally a magnetic sensor) are enclosed into the casing. The retractable wheel is movable between a retracted position in which the wheel is inserted into the casing and an extended position in which the wheel protrudes at least partially from the bottom face of the casing adapted to be in physical contact with the jacket of the object to be inspected. When the wheel is in the extended position, at least a section of the bottom face of the casing is raised from the jacket, thereby increasing the distance between the magnet included in the casing and the jacket.

It should be understood that the retractable wheel(s) may be located outside the casing of the PEC probe when in the retracted position as long as they do not raise the bottom face of the casing when in the retracted position.

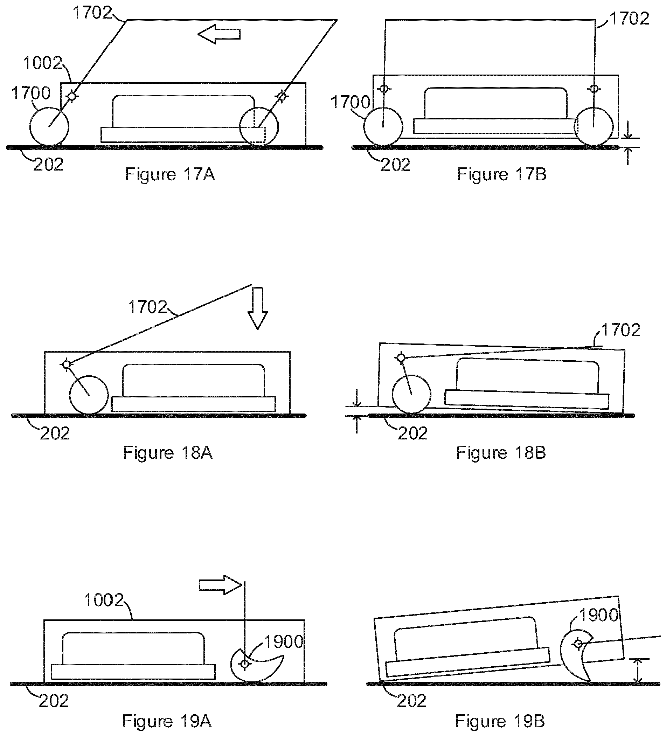

Figs. 17A and 17B illustrate one embodiment of a PEC probe comprising a casing 1002 in which at least one magnet and at least one coil are enclosed. The PEC probe further comprises four retractable wheels 1700 movably secured to the casing 1002. The wheels 1700 are movable between a retracted position in which they are not in physical contact with the jacket 202 of an object to be inspected and an extended position in which they are in physical contact with the jacket 202 and the bottom face of the casing 1002 is no longer in physical contact with the jacket 202. As illustrated in Figs. 17A and 17B, the PEC probe further comprises a lever 1702 that may be actioned by pushing the probe forward. When the user pushes the probe, the wheels are pushed down onto the jacket 202 and apply a force opposite to the attraction force of the magnets. This mechanism facilitates the forward movement of the probe by reducing the friction of the probe on the jacket 202.

Figs. 18A and 18B illustrates one embodiment of a PEC probe that comprises one or two retractable wheels which are connected to a lever that is actioned by pushing a lever or button 1702 on the top of the probe. When the user pushes the lever or button, the wheels are pushed down onto the jacket 202.

Figs. 19A and 19B illustrate a PEC probe that comprises a spring-equipped wheel 1900 provided with a comma-like shape that can be embedded in the probe casing 1002. When the user pushes forward on the probe, the wheel 1900 turns and, thanks to its comma-like shape, it pushes down onto the jacket 202 and applies a force opposite to the attraction force of the magnets.

In the same or another embodiment, in order to facilitate the movement of the probe over the jacket, a material having a low friction coefficient is deposited on the bottom face of the probe shoe. The probe shoe can be entirely made of low friction materials such as Teflon™ or ultrahigh-molecular-weight polyethylene, or can be covered by a layer of such a material.

In a configuration such as that of Fig. 8 where coils are wound around the magnets, an appropriate current can be injected in the coils when the user wants to detach or move the probe. The coils are designed to create a magnetic field opposing the natural field of the magnet. Appropriate coil dimensioning and current level allow for a reduction of the total magnetic field generated by the magnet and a consequent reduction of the attraction force F. It should be understood that the coils are connectable to a source of electrical current for generating the inspection magnetic field. In one embodiment, the same source of electrical current is used for the magnetic field opposing the magnetic field of the magnet. In another embodiment, a second and different source of electrical current may be used.

Coils provided around the magnets can also be used to modulate the magnetic field intensity and optimize it as function of the jacket. An increased total field could be generated to reach a sufficient saturation in thick ferromagnetic jackets. In this case, the coils are activated during PEC measurements.

An Electro-Permanent Magnet (EPM) is made of a combination of magnetically hard materials (e.g. Nd-Fe-B or other materials with high coercivity) and semi-hard materials (e.g. Al-Ni-Co or other low coercivity materials). EPMs can be "turned on" and "turned off" by current flowing through coils wound around these magnets. The configuration of Fig. 8 can be implemented with EPMs and the coils can be used to turn the EPMs on and off.

The embodiments described above are intended to be exemplary only. The scope of the invention is therefore intended to be limited solely by the appended claims.

**Claims**

1. A Pulsed Eddy Current (PEC) probe for PEC testing of an electrically conductive object covered with a ferromagnetic protective jacket, the PEC probe comprising:

   at least one coil for at least one of generating an inspection magnetic field and detecting an induced magnetic field;
   at least one permanent magnet for magnetically saturating the ferromagnetic protective jacket; and
   means for selectively reducing an attraction between the at least one magnet and the ferromagnetic protective jacket.

2. The PEC probe as claimed in claim 1, further comprising a magnetic sensor for detecting the induced magnetic field, the at least one coil being generating said inspection magnetic field only.

3. The PEC probe as claimed in claim 2, wherein the magnetic sensor comprises one of a detection coil, a Giant Magneto-Resistor, a Tunnelling Magneto-Resistor and a Hall effect sensor.

4. The PEC probe as claimed in any one of the preceding claims, wherein the at least one coil is configured for both generating the inspection magnetic field and detecting the induced magnetic field.

5. The PEC probe as claimed in any one of the preceding claims, wherein said at least one coil comprises a yoke-type coil.

6. The PEC probe as claimed in claim 5, wherein said at least one permanent magnet comprises a plurality of magnets disposed near legs of the yoke-type coil, with opposite poles of the plurality of magnets being placed on opposite sides of the yoke-type coil to direct a magnetic saturation under the legs of the yoke-type coil.

7. The PEC probe as claimed in any one of the preceding claims, wherein said at least one coil and said magnetic sensor are provided by coaxial excitation and magnetic sensor.

8. The PEC probe as claimed in any one of the preceding claims, wherein each one of said at least one coil is wound around a respective one of the at least one permanent magnet.

9. The PEC probe of any one of the preceding claims, wherein the means for selectively reducing the attraction comprises mechanical means for increasing a distance between the at least one permanent magnet and the ferromagnetic protective jacket.

10. The PEC probe of claim 9, further comprising a casing, the at least one coil and the at least one permanent magnet being enclosed in the casing.

11. The PEC probe of claim 10, wherein the casing is provided with a handle for rotating the casing away from the ferromagnetic protective jacket about a fulcrum point.

12. The PEC probe of claim 10 or 11, wherein the mechanical means comprises a lever device for increasing the distance between the at least one permanent magnet and the ferromagnetic protective jacket.

13. The PEC probe of any one of the claims 10 to 12, wherein the casing comprises a bottom casing body and a top casing body movable relative to the bottom casing body, the at least one coil and the at least one permanent magnet being secured to the top casing body, the bottom casing body comprising a bottom face to be positioned in physical contact with the ferromagnetic protective jacket and a top face shaped so as to increase a distance between the at least one permanent magnet and the bottom face of the bottom casing body upon at least one of a rotation and a translation of the top casing body relative to the bottom casing body.

14. The PEC probe of any one of the claims 10 to 13, further comprising at least one spring, the casing comprising a bottom casing body and a top casing body movable relative to the bottom casing body, the at least one coil and the at least one permanent magnet being secured to the top casing body, the bottom casing body comprising a bottom face to be positioned in physical contact with the ferromagnetic protective jacket, the spring being secured between the bottom casing body and the top casing body.

15. The PEC probe of any one of the claims 10 to 14, further comprising at least one retractable wheel secured to the casing for raising the probe from the ferromagnetic protective jacket.

16. The PEC probe of any one of the claims 10 to 15, further comprising at least one spring-equipped wheel having a comma-like shape for raising the probe from the ferromagnetic protective jacket.

17. The PEC probe of any one of the preceding claims, wherein the means for selectively reducing the attraction comprises at least one additional magnet movable between a rest position in which the at least one additional magnet is away from the at least one permanent magnet and an active position in which the at least one additional magnet is positioned adjacent to the at least one permanent magnet, a pole of the at least one secondary magnet being placed in opposition to a pole of the at least one permanent magnet.

Figure 1 - Prior Art

Figure 2A

Figure 2B

Figure 2C

Figure 2D

Figure 2E

Figure 3A

Figure 3B

Figure 3C

Figure 4

Figure 5

Figure 6

Figure 7A

Figure 7B

Figure 8

Figure 9A

Figure 9B

Figure 10A

Figure 10B

Figure 11A

Figure 11B

Figure 12A

Figure 12B

Figure 13A

Figure 13B

Figure 14A

Figure 14B

Figure 15A

Figure 15B

Figure 16

Figure 17A

Figure 17B

Figure 18A

Figure 18B

Figure 19A

Figure 19B

Europäisches
Patentamt
European
Patent Office
Office européen
des brevets

# EUROPEAN SEARCH REPORT

Application Number

EP 18 18 7116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/080735 A1 (WACHE GILBERT [FR]) 1 May 2003 (2003-05-01) * figure 2 * * paragraph [0016] - paragraph [0041] * | 1-3,5-10 | INV. G01N27/90 |
| X | DE 10 2013 219287 A1 (MAGNETISCHE PRÜFANLAGEN GMBH [DE]) 26 March 2015 (2015-03-26) * figures 1, 3 * * paragraph [0052] - paragraph [0071] * | 1,5,6, 8-10 | |
| X | US 2013/076349 A1 (KUROKAWA MASAAKI [JP]) 28 March 2013 (2013-03-28) * figures 7A, 7B * * paragraph [0040] - paragraph [0042] * | 1,4-6, 8-10,14 | |
| X | US 9 213 018 B2 (BOENISCH ANDREAS [DE]; INNOSPECTION GROUP LTD [GB]) 15 December 2015 (2015-12-15) * figures 1, 2, 3 * * column 7, line 8 - column 10, line 30 * | 1-3,5-8, 17 | TECHNICAL FIELDS SEARCHED (IPC) |
| X | RU 2 493 561 C1 (FEDERAL NOE G BJUDZHETNOE OBRAZOVATEL NOE UCHREZHDENIE VYSSHEGO PROFES) 20 September 2013 (2013-09-20) * figures 1,2 * * paragraph [0012] - paragraph [0019] * | 1-3, 5-10,12 | G01N |
| X | RU 2 566 416 C1 (FEDERAL NOE G BJUDZHETNOE OBRAZOVATEL NOE UCHREZHDENIE VYSSHEGO PROFES) 27 October 2015 (2015-10-27) * figures 1, 2, 3 * * paragraph [0011] - paragraph [0016] * * paragraph [0003] * | 1-3, 5-11,13, 15,16 | |

-/--

The present search report has been drawn up for all claims

| Place of search | Date of completion of the search | Examiner |
|---|---|---|
| Munich | 14 November 2018 | Melzer, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 18 7116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/143088 A1 (MITSUBISHI ELECTRIC CORP [JP]) 15 September 2016 (2016-09-15) <br> * figures 1, 7, 10 * <br> * paragraph [0014] - paragraph [0065] * <br> ----- | 5 | |
| A | JP 5 721475 B2 (SUMITOMO KINZOKU TECHNOL KK) 20 May 2015 (2015-05-20) <br> * figures 1, 5 * <br> ----- | 6,8 | |

TECHNICAL FIELDS
SEARCHED      (IPC)

The present search report has been drawn up for all claims

| Place of search | Date of completion of the search | Examiner |
|---|---|---|
| Munich | 14 November 2018 | Melzer, Katharina |

EPO FORM 1503 03.82 (P04C01)

## ANNEX TO THE EUROPEAN SEARCH REPORT
## ON EUROPEAN PATENT APPLICATION NO.

EP 18 18 7116

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2018

| Patent document cited in search report | Publication date | Patent family member(s) | Publication date |
|---|---|---|---|
| US 2003080735 A1 | 01-05-2003 | CA 2409530 A1<br>EP 1306667 A1<br>FR 2831667 A1<br>US 2003080735 A1 | 29-04-2003<br>02-05-2003<br>02-05-2003<br>01-05-2003 |
| DE 102013219287 A1 | 26-03-2015 | DE 102013219287 A1<br>WO 2015044130 A1 | 26-03-2015<br>02-04-2015 |
| US 2013076349 A1 | 28-03-2013 | EP 2574913 A1<br>JP 5851783 B2<br>JP 2013072667 A<br>US 2013076349 A1 | 03-04-2013<br>03-02-2016<br>22-04-2013<br>28-03-2013 |
| US 9213018 B2 | 15-12-2015 | AU 2010317751 A1<br>BR 112012011550 A2<br>CA 2815627 A1<br>EP 2502061 A1<br>GB 2475315 A<br>US 2012306483 A1<br>WO 2011058370 A1 | 21-06-2012<br>28-06-2016<br>19-05-2011<br>26-09-2012<br>18-05-2011<br>06-12-2012<br>19-05-2011 |
| RU 2493561 C1 | 20-09-2013 | | |
| RU 2566416 C1 | 27-10-2015 | | |
| WO 2016143088 A1 | 15-09-2016 | CN 107430090 A<br>DE 112015006279 T5<br>JP 6289732 B2<br>JP WO2016143088 A1<br>KR 20170120167 A<br>WO 2016143088 A1 | 01-12-2017<br>11-01-2018<br>07-03-2018<br>08-06-2017<br>30-10-2017<br>15-09-2016 |
| JP 5721475 B2 | 20-05-2015 | JP 5721475 B2<br>JP 2012189326 A | 20-05-2015<br>04-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101520435 B

### Non-patent literature cited in the description

- Measurement of Wall Thinning through Insulation with Ferromagnetic Cladding Using Pulsed Eddy Current Testing. **XU et al.** Advanced Materials Research. Huazhong University of Science and Technology, 2011, vol. 301-303, 426-429

- **WU et al.** Development of Pulsed Eddy Current Testing System for Wall Thinning through Insulation with Ferromagnetic Cladding. *18th World Conference on Non-destructive Testing,* 16 April 2012